# EUROPEAN PATENT APPLICATION

(11) **EP 4 597 353 A1**
(43) Date of publication of application: **06.08.2025**
(21) Application number: 24154809.8
(22) Date of filing: 30.01.2024
(51) Int. Cl.: G06F 30/32, G06F 30/3308, G06F 30/367, G06F 117/08, G06F 111/20

(54) **CHIPLET ARRANGEMENT MODELING**

(71) Applicant: LTU Licens AB, SE-977 75 LULEÅ (SE)
(72) Inventor: Delsing, Jerker, 977 75 Luleå (SE); Paniagua, Cristina, 977 75 Luleå (SE); Sing Chouhan, Shailesh, 977 75 Luleå (SE)
(74) Representative: Ström & Gulliksson AB

(57) **Abstract**

A method (600) is presented. The method (600) comprise obtaining (610) an engineering plan and a chiplet arrangement hardware model. The method (600) further comprises estimating (630) a microsystem hardware model based on the hardware requirements and a hardware data set describing hardware resources of the chiplet arrangement and simulating (640) the estimated microsystem hardware model by electrical simulations to provide one or more hardware capabilities. The method (600) further comprises obtaining (650) a chiplet arrangement environment model and estimating (660) a microsystem software model using the hardware capabilities and the software requirements. The method (600) further comprises simulating (670) the estimated microsystem software model on the chiplet arrangement environment model to provide one or more software capabilities and compiling (680) the estimated microsystem hardware model, the estimated microsystem software model, the one or more hardware capabilities, the one or more software capabilities to a microsystem model comprising one or more microsystem capabilities.

## Description

### TECHNICAL FIELD

The present disclosure relates to chiplets. More precisely this disclosure relates to modeling of an architecture, an integration and a deployment a microservice of chiplet arrangements.

### BACKGROUND

According to Moore's law, every two years the number of transistors in an integrated circuit (IC) doubles. However, due to high costs, the pace of silicon manufacturing improvement is decelerating, and it is increasingly challenging to produce commercially viable chips on smaller and smaller scales. The current development of monolithic chips faces not only economical limitations but also challenges in terms of supply/demand, flexibility and competitiveness. Generally, from the early design phases, the chip is conceived without the possibility of future change or evolution, thereby hampering the reuse of hardware.

In response to this situation, chiplets have emerged as a promising solution. Generally, a chiplet is a modular semiconductor component that is configured to perform a specific function or subset of functions within larger integrated circuit. A chiplet may be combined with other chiplets to form a more complex integrated circuit, offering greater flexibility in design and manufacturing.

The concept of chiplets has been around for several decades, with the first examples appearing in the 1980s. At that time, chiplets were primarily used for memory and I/O functions, and were mounted on separate packages that were connected to the main processor through a bus interface. In recent years, chiplets have gained renewed interest due to advances in semiconductor packaging technology and the increasing complexity of modern electronic devices. By breaking down a complex system or system-on-chip (SoC) into smaller, more manageable components, chiplets offer several advantages.

To facilitate the use of chiplets, industry groups and standards bodies have developed interfaces and protocols for connecting and communicating between chiplets. Examples include the Chiplet Integration Interface (CII) from the Semiconductor Industry Association (SIA) and the Advanced Interface Bus (AIB) from the Open Compute Project (OCP). Chiplets are a promising approach to designing and manufacturing complex semiconductor devices, offering greater flexibility, efficiency, yield, scalability, optimized performance, and reliability.

The flexibility in design and manufacturing of chiplets facilitates provisioning of hardware that may be configured to perform a vast number of different tasks. However, a chiplet is a locked solution like creating PCBs serving a particular task or functionality. Although standardization work is progressing, the full potential of chiplets is yet to be exploited.

### SUMMARY

An object of the present invention is to provide a new type of methodology for modelling, simulating and validating reconfigurable hardware and software solutions which is improved over prior art and which eliminates or at least mitigates the drawbacks discussed above. More specifically, an object of the invention is to provide a method, executable at design time and/or runtime, for modeling a microsystem and associated produced or consumed microservice of the microsystem for deployment on a chiplet arrangement. These objects are achieved by the technique set forth in the appended independent claims with preferred embodiments defined in the dependent claims related thereto.

In a first aspect, a method is presented. The method comprises: obtaining an engineering plan comprising hardware requirements and software requirements of a microsystem for producing and/or consuming one or more microservices; obtaining a chiplet arrangement hardware model describing an electrical environment of a chiplet arrangement, wherein the chiplet arrangement is controllable by an external communications interface and comprises at least one chiplet connected to a chiplet network, and wherein the at least one chiplet comprises at least one hardware resource; estimating a microsystem hardware model based on the hardware requirements and a hardware data set describing hardware resources of the chiplet arrangement; simulating the estimated microsystem hardware model by electrical simulations based on the chiplet arrangement hardware model to provide one or more hardware capabilities, obtaining a chiplet arrangement environment model describing a software environment of the chiplet arrangement; estimating a microsystem software model comprising the produced and/or consumed one or more microservices using the hardware capabilities and the software requirements; simulating the estimated microsystem software model on the chiplet arrangement environment model to provide one or more software capabilities; compiling the estimated microsystem hardware model, the estimated microsystem software model, the one or more hardware capabilities, the one or more software capabilities to a microsystem model comprising one or more microsystem capabilities.

In one variant, the method further comprises validating the hardware capabilities based on the hardware requirements, providing hardware validation data. This is beneficial as it enables, prior to deployment, a validation of the hardware side of the engineering plan.

In one variant, the method further comprises providing alternative hardware capabilities and an estimated alternative microsystem hardware model for further processing by: estimating the alternative microsystem hardware model based on the estimated microsystem hardware model, the hardware requirements, the hardware data set and the hardware capabilities comprising models of hardware resources available on the chiplet arrangement; and simulating the estimated alternative microsystem hardware model by electrical simulations to provide one or more alternative hardware capabilities. This is beneficial as it enables providing a plurality of different hardware solutions providable by the chiplet arrangement for the engineering plan.

In one variant, providing alternative hardware capabilities and the estimated alternative microsystem hardware model for further processing is performed selectively based on the hardware validation data. This is beneficial as alternative models may only be provided if validation fails which will reduce modeling time.

In one variant, the method further comprises validating the alternative hardware capabilities based on the hardware requirements providing alternative hardware validation data. This is beneficial as it enables providing a plurality of different hardware solutions providable by the chiplet arrangement for the engineering plan.

In one variant, the method further comprises, before estimating the microsystem software model, selecting one of the microsystem hardware model or the alternative microsystem hardware model as microsystem hardware model for further processing based on processing of the hardware validation data and the alternative hardware validation data. This is beneficial as it enables optimization of the microsystem from a hardware perspective.

In one variant, the method further comprises validating the software capabilities based on the software requirements, providing software validation data. This is beneficial as it enables, prior to deployment, a validation of the software side of the engineering plan.

In one variant, providing alternative hardware capabilities and the estimated alternative microsystem hardware model for further processing is performed selectively based on the software validation data. This is beneficial as a modeling time may be reduced by not modeling systems that fail to meet the software requirements.

In one variant, the method further comprises providing alternative software capabilities and an estimated alternative microsystem software model by: estimating the alternative microsystem software model using the hardware capabilities and the software requirements; and simulating the estimated alternative microsystem software model on the chiplet arrangement environment model to provide one or more alternative software capabilities. This is beneficial as it enables providing a plurality of different software solutions providable by the chiplet arrangement for the engineering plan.

In one variant, providing alternative software capabilities and the estimated alternative microsystem software model for further processing is performed selectively based on the software validation data. This is beneficial as alternative models may only be provided if validation fails which will reduce modeling time.

In one variant, the method further comprises validating the alternative software capabilities based on the software requirements, providing alternative software validation data. This is beneficial as it enables providing a plurality of different hardware solutions providable by the chiplet arrangement for the engineering plan.

In one variant, the method further comprises before providing the estimated microsystem hardware model and the estimated microsystem software model as a microsystem model, selecting one of the microsystem software model or the alternative microsystem software model as microsystem software model for further processing based on processing of the software validation data and the alternative software validation data. This is beneficial as it enables optimization of the microsystem from a software perspective.

In one variant, the software requirements comprise at least one compatibility constraint, at least one performance constraint, and/or at least one security constraint.

In one variant, the hardware requirements comprise at least one physical constraint, at least one connectivity constraint, and/or at least one availability constraint.

In one variant, the chiplet arrangement environment model is a digital twin of the chiplet arrangement.

In one variant, the chiplet arrangement hardware model comprises hardware models of one or more chiplets of the chiplet arrangement.

In one variant, the chiplet arrangement hardware model comprises physical hardware devices of one or more chiplets of the chiplet arrangement.

In one variant, the method further comprises deploying the microsystem model on the chiplet arrangement.

In one variant, the method further comprises estimating a utilization of the chiplet arrangement based on the microsystem model and the microsystem capabilities.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Embodiments of the invention will be described in the following; references being made to the appended diagrammatical drawings which illustrate non-limiting examples of how the inventive concept can be reduced into practice.
Fig. 1 is a schematic view of a chiplet arrangement according to some examples of the present disclosure;
Fig. 2 is a schematic view of a chiplet according to some examples of the present disclosure;
Fig. 3 is a schematic view of a microsystem associated with a microservice according to some examples of the present disclosure;
Fig. 4 is a schematic view of a chiplet arrangement according to some examples of the present disclosure;
Fig. 5 is a schematic view of a control plane according to some examples of the present disclosure;
Fig. 6 is a schematic view of a microsystem model for a chiplet arrangement according to some examples of the present disclosure;
Fig. 7 is a schematic view of a method according to some examples of the present disclosure;
Fig. 8 is a hierarchical view of an exemplary chiplet arrangement environment model according to an example;
Fig. 9 is a SysML sequence diagram of dynamic instantiation of a microsystem according to some examples of the present disclosure.
Fig. 10 is a timeline graph of a lifecycle of a chiplet arrangement according to an example;
Fig. 11 is a schematic view of a computer program product according to an example; and
Fig. 12 is a schematic view of a computer program being loaded onto a chiplet arrangement according to an example.
Fig. 13 is a schematic view of a computer program being loaded onto a computer system according to an example.

### DETAILED DESCRIPTION OF EMBODIMENTS

Hereinafter, certain embodiments will be described more fully with reference to the accompanying drawings. The invention may, however, be embodied in many different forms and should not be construed as limited to the embodiments set forth herein; rather, these embodiments are provided by way of example so that this disclosure will be thorough and complete, and will fully convey the scope of the invention, such as it is defined in the appended claims, to those skilled in the art.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

The term "coupled" is defined as connected, although not necessarily directly, and not necessarily mechanically. Similarly, the term "connected", or "operatively connected", is defined as connected, although not necessarily directly, and not necessarily mechanically. Two or more items that are "coupled" or "connected" may be integral with each other. The terms "a" and "an" are defined as one or more unless this disclosure explicitly requires otherwise. The terms "substantially", "approximately" and "about" are defined as largely, but not necessarily wholly as what is specified, as understood by a person of ordinary skill in the art. The terms "comprise" (and any forms thereof), "have" (and any forms thereof), "include" (and any form thereof) and "contain" (and any forms thereof) are open-ended linking verbs. As a result, a method that "comprises", "has", "includes" or "contains" one or more steps, possesses those one or more steps, but is not limited to possessing only those one or more steps.

Hereinafter, certain embodiments will be described more fully with reference to the accompanying drawings. The invention may, however, be embodied in many different forms and should not be construed as limited to the embodiments set forth herein; rather, these embodiments are provided by way of example so that this disclosure will be thorough and complete, and will fully convey the scope of the invention, such as it is defined in the appended claims, to those skilled in the art.

Similarly, the term "connected", or "operatively connected", is defined as connected, although not necessarily directly, and not necessarily mechanically. Two or more items that are "coupled" or "connected" may be integral with each other. The terms "a" and "an" are defined as one or more unless this disclosure explicitly requires otherwise. The terms "substantially", "approximately" and "about" are defined as largely, but not necessarily wholly what is specified, as understood by a person of ordinary skill in the art. The terms "comprise" (and any forms thereof), "have" (and any forms thereof), "include" (and any form thereof) and "contain" (and any forms thereof) are open-ended linking verbs. As a result, a method that "comprises", "has", "includes" or "contains" one or more steps, possesses those one or more steps, but is not limited to possessing only those one or more steps.

For the present disclosure, a chiplet is a, commonly, tiny integrated circuit (IC) that comprises a well-defined subset of functionality. It is designed to be combined with other chiplets to form a chiplet arrangement. The chiplet arrangement may (but is not required to) be provided on a common interposer in a single package. The chiplets of a chiplet arrangement are connected using a network structure exemplified by, but not limited to, current well known structures like AIB, PCIe, UIB (chiplet bus standard led by Intel), etc. It should be mentioned that chiplet to chiplet communication may be direct or indirect (i.e. via one or more other chiplets). Chiplets may be configured with substantially any hardware and, optionally, software functionality. A chiplet may comprise, or consist, of configurable hardware such as Complex Programmable Logic Devices (CPLDs) and/or Field Programmable Gate Arrays (FPGAs).

Chiplet arrangements have several benefits compared to e.g., large scale integrated circuits (ICs). As chiplet arrangements separate different functions into discrete chiplets, chiplet arrangements make it easier to isolate and fix defects during manufacturing. This may lead to higher overall yield rates and lower costs. By mixing and matching different chiplets, designers are able to create custom chiplet arrangements in the form of system on chips (SoCs) that are optimized for specific applications. This may result in more efficient, higher-performing devices. By working with smaller, more manageable constitutional components in the form of chiplets, designers are able to iterate more quickly, and test individual constitutional components more thoroughly before integrating them into a larger system of a chiplet arrangement 100. The designers are further able to add on-the-fly or remove the component(s) from the SoC if needed. This, makes it comfortable for design engineers in scaling the performance and complexity of the overall system. Chiplets enable companies to take advantage of economies of scale and reuse existing chip designs, which reduces cost of new developments. Chiplets support a variety of applications ranging from high power (server in data centers) to battery-operated devices (smartwatch). The philosophy behind chiplet allows interoperability among different vendors of chiplets. This leads to improved performance when compared with a single monolithic chip solution.

The configurability of chiplets from a hardware perspective has historically been isolated from a corresponding software configurability. A software functionality of a chiplet is generally limited to the functionality provided by each of the different chiplets. Each chiplet is addressed using a hardware abstraction layer (HAL), generally specific for each chiplet. In order to allow full flexibility of a chiplet and also to increase utilization of resources of a SoC, the inventors behind the present disclosure have realized that a chiplet, or a collection of chiplets, may be shared and utilized using a plurality of microsystems and associated produced and/or consumed microservices of the plurality of microsystems.

Generally, microservices are a software architectural approach in which a large application is broken down into small, independent, and loosely coupled services that may be developed, deployed, and maintained separately. Each microservice typically performs a specific function (e.g. business function etc.) and communicates with other microservices via lightweight mechanisms such as HTTP messaging protocols (MQTT, CoAP, etc.). This approach allows for faster and more efficient development, deployment, and scaling of the application, as well as increased resilience and fault tolerance. Microservices also enable teams to work independently on different parts of the application, with each team responsible for developing and maintaining their own microservice. This approach may improve overall development speed and reduce the risk of conflicts or dependencies between teams. Overall, microservices may provide greater agility, scalability, and reliability in large and complex information systems/computer systems.

Historically, microservices have been designed to be deployed as independent, lightweight components that can be run on a distributed system of commodity hardware. This allows for greater scalability and fault tolerance than running a monolithic application on a single server or server cluster. One common hardware configuration for microservices are cloud-based infrastructures. A common choice is to deploy microservices in the cloud using services such as Amazon Web Services (AWS), Microsoft Azure, or Google Cloud Platform (GCP). These cloud providers offer a variety of services and tools for running and managing microservices, including container orchestration platforms like Kubernetes. Alternatively, microservices may be run on virtual machines (VMs) using hypervisors such as VMware or Hyper-V. This allows for greater flexibility in deploying and scaling microservices across different hardware configurations. In some cases, microservices may be deployed on edge devices such as internet of things (IoT) devices or embedded systems. This requires a lightweight runtime environment that can run on resource-constrained hardware.

It is generally agreed that microservices have evolved from service-oriented architecture (SOA), and are commonly considered equivalent to, or a subset of, SOA. Microservices and SOA share many attributes, such as nonfunctional requirements, that are provided by the architecture and that are key for this work. To exemplify, systems are able to discover services at run-time, without the need to have their address fixed at design time. This is usually achieved through some type of service registry, where service producers advertise their offerings enabling consumers to find them even in dynamic environments. Generally, the services communicate only through designed APIs, holding the concepts of information hiding and encapsulation. In this way, services do not share dependencies with each other and can be modified, internally, as needed without impacting the behavior of other services. Further to this, service exchanges commonly happen at run-time and may change based on present conditions. Therefore, services do not need to be aggregated pre-deployment, as in early binding, enabling application self-healing and optimization in the execution environment. These capabilities require more logic that can be added to each system or delegated to a mediator that will organize the network.

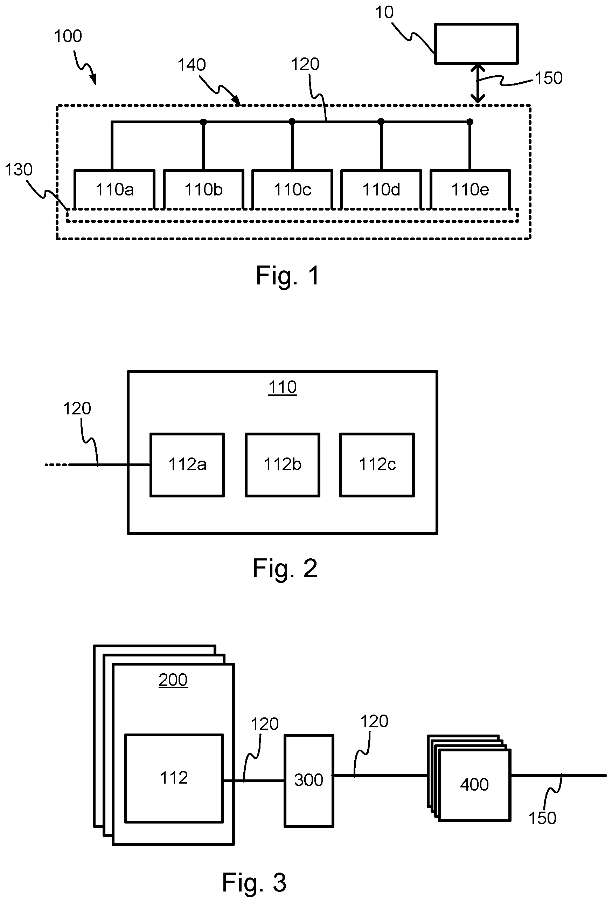

In Fig. 1, a simplified view of a chiplet arrangement 100 is shown. The chiplet arrangement 100 comprises a plurality of chiplets 110a, 110b, 110c, 110d, 110e. The chiplet arrangement 100 in Fig. 1 is disclosed to comprise a plurality of chiplets 110a, 110b, 110c, 110d, 110e, i.e. two or more chiplets, but the skilled person will appreciate that a chiplet arrangement 100 may sometimes include one single chiplet 110a, 110b, 110c, 110d, 110e. The chiplets 110a, 110b, 110c, 110d, 110e are connected by a chiplet network 120 enabling communication between the chiplets 110a, 110b, 110c, 110d, 110e. The chiplet arrangement 100 is controllable by an external interface 150 enabling the chiplet arrangement 100 to control, be controlled by or otherwise interact with one or more external systems 10. The chiplets 110a, 110b, 110c, 110d, 110e of the chiplet arrangement 100 may all be arranged on a common interposer 130 and optionally form a chiplet package 140. In other examples of the present disclosure, the chiplet arrangement 100 may comprise a number of chiplets 110a, 110b, 110c, 110d, 110e arranged on different interposers 130 and/or forming different chiplet packages 140. Regardless of the arrangement or the number of chiplets 110a, 110b, 110c, 110d, 110e, the chiplets 110a, 110b, 110c, 110d, 110e are connected by the chiplet network 120. A chiplet arrangement 100 according to the present disclosure may be referred to as one or more of a multi-chip module (MCM), hybrid IC, 2.5D IC, or an advanced package.

The chiplet network 120 may be any suitable network or corresponding connection that enables communication between the chiplets 110a, 110b, 110c, 110d, 110e, and/or between chiplets 110a, 110b, 110c, 110d, 110e and the external interface 150. In some examples the chiplet network 120 may be a network configured according to one or more network standards such as UCIe, Bunch of Wires (BoW), OpenHBI, or OIF XSR. The chiplet network 120 is not necessarily formed of one physical or virtual network but may be a combination of one or more physical networks and/or one more virtual networks. This will be further explained in later sections.

In Fig. 1, the chiplet arrangement 100 is shown comprising five chiplets 110a, 110b, 110c, 110d, 110e. This is for illustrative examples only and the skilled person will appreciate that the chiplet arrangement 100 may comprise any number of chiplets 110a, 110b, 110c, 110d, 110e. In fact, as mentioned and as will be apparent after digestion of the complete disclosure, the teachings presented herein are applicable also to a single chiplet 110a, 110b, 110c, 110d, 110e.

The skilled person will appreciate that the chiplets 110a, 110b, 110c, 110d, 110e, chiplet arrangements 100 and other features presented herein may be presented in a simplified and/or condensed form in order to make the present disclosure as efficient as possible. For instance, the chiplet arrangement 100 of Fig. 1 will generally require some form of power distribution in order to provide and/or control power to the chiplets 110a, 110b, 110c, 110d, 110e. Such features and configurations are well known to the skilled person and need not be further explained.

In Fig. 2, an exemplary simplified block diagram of a chiplet 110 is shown. The chiplet 110 comprises at least one hardware resource 112a, 112b, 112c. The chiplet 110 of Fig. 2 is shown with three hardware resources 112a, 112b, 112c, but any number of hardware resources is applicable. At least one of the hardware resources 112a, 112b, 112c of the chiplet 110 is addressable at the chiplet network 120. To this end, a first hardware resource 112a may be a network interface hardware resource configured to connect the chiplet 110 to, and communicate via, the chiplet network 120. A second hardware resource 112b may be a computational hardware resource such as a CPU, a GPU or a microcontroller. A third hardware resource 112c may be a data storage unit, i.e. a memory hardware resource such as a volatile memory or a non-volatile memory. A chiplet 110 comprising a network interface hardware resource, a computational hardware resource and a memory hardware resource may be considered a minimum chiplet 110. However, not all hardware resources 112a, 112b, 112c may be addressable across the chiplet network 120, and from a perspective of the chiplet arrangement 100, a specific chiplet 110 may comprise only a computational hardware resource as an only addressable resource of that specific chiplet 110.

The chiplet 110 may comprise further hardware resources 112a, 112b, 112c such as, but not limited to, sensor hardware resources. Sensor hardware resources, i.e. data acquisition units, may be exemplified as a temperature sensor, a pressure sensor, a light sensor, an optical sensor, a voltage sensor, a fingerprint sensor etc. Additionally, or alternatively, the chiplet 110 may comprise hardware resources 112a, 112b, 112c in the form of peripheral hardware resources. Peripheral hardware resources may be exemplified as, but not limited to, an interrupt controller, a DMA controller, a digital/analog I/O, a DAC, an ADC, a clock, a peripheral I/O device, a peripheral storage device, a peripheral display devices, a peripheral communication devices, etc. Additionally, or alternatively, the chiplet 110 may comprise hardware resources 112a, 112b, 112c in the form of a communication hardware resource. Communication hardware resources may be exemplified as, but not limited to, a PCIe interface or an UCIe interface. Additionally, or alternatively, the chiplet 110 may comprise hardware resources 112a, 112b, 112c in the form of an actuator hardware resource. Actuator hardware resources may be exemplified as, but not limited to, a loudspeaker, a buzzer, a soft-switch, a light source, a display etc.

It should be mentioned that each hardware resource 112a, 112b, 112c may be associated with one or more properties, e.g. capabilities, specifications etc. These properties may be provided by e.g. a vendor, supplier or designer of the hardware resource 112a, 112b, 112c. In some examples, some or all hardware resources 112a, 112b, 112c may be associated with a model of the hardware resource 112a, 112b, 112c that may be utilized in simulation of the hardware resource 112a, 112b, 112c.

The inventors behind the present disclosure have realized that, not only may microservices be deployed and executed by chiplets 110, the chiplets 110 themselves may be managed and controlled correspondingly to microservices. That is to say, hardware recourses 112 of a chiplet 110, or a plurality of chiplets 110, may be configured to form a microsystem 200, see Fig. 3.

In Fig. 3, a microsystem 200 according to the present disclosure is shown. The microsystem 200 provides behavior based on stored, or obtained data and computation thereupon. The resulting capabilities are externally exposed through one or more produced microservices 400. A microsystem 200 is composed of (e.g., comprises, configured with) one or more hardware resources 112 that execute one to several tasks and processes to form the functionality. A specific microsystem 200 may be associated with one or more hardware resources 112 from one specific chiplet 110 of the chiplet arrangement 100, or associated with hardware resources 112 from two or more chiplets 110 of the chiplet arrangement 100. As will be taught in later sections, microsystems 200 may be dynamically instantiated and subsequently re-worked at runtime. Thus enabling flexible use and reuse of engaged hardware resources 112. The microsystem 200 may comprise configurable or static software (program instructions) stored by and executable by the hardware resource(s) of the microsystem 200. It should be mentioned that microsystems 200 defined solely by the hardware resources 112 and that provide the desired functionality without requiring software.

Orchestration of the microsystem(s) 200 is provided by a control plane 300. The orchestration by the control plane 300 of one or more microsystems 200 may comprise, but is not limited to, managing microsystems 200, coordinating the deployment of microsystems 200, scaling microsystems 200, and/or control operation of microsystems 200. The control plane 300 is advantageously further configured to orchestrate microservices 400 exposed at the external communications interface 150. The orchestration by the control plane 300 of one or more microservices 400 may comprise, but is not limited to, managing microservices 400, coordinating the deployment of microservices 400, scaling microservices 400, and/or control operation of microservices 400. The control plane 300 is further advantageously configured to orchestrate binding (association) between a specific microsystem 200 and one or more microservices 400.

Advantageously, the microservices 400 are registered at an external resource registry associated with the external system 10. The registration of the microservices 400 at the external resource registry of the external system 10 may be provide by the control plane 300. One or more microsystems 200 may be provided with software instructions enabling the one or more microsystems 200 to register (through the control plane 300) their associated microservices 400 at the external resource registry of the external system 10.

The control plane 300 may be formed as a, for the chiplet arrangement 100, centralized control plane and will generally be described as such. However, it should be emphasized that the present disclosure is applicable also, without limitation, to decentralized or distributed implementations of the control plane 300.

To exemplify the functionality of the control plane; the control plane 300 may be configured to discover and manage available hardware resources 112 and microsystems 200. This implies monitoring resource usage and availability, as well as allocating and deallocating resources as needed. The control plane 300 may, additionally, or alternatively, be configured to deploy and manage microservices 400 on the available hardware resources 112 by associated microsystem 200. This implies ensuring that each microservice 400 is deployed to an appropriate location and that it may communicate with other microservices 400 as needed. The control plane 300 may, additionally, or alternatively, be configured to provide service scaling. That is to say, as demand for a particular microservice 400 increases or decreases, the control plane 300 may be configured to scale the microservice 400 up or down accordingly. This may involve adding or removing instances of the microservice 400, and/or adjusting the microsystem allocated to each instance of the microservice 400. The control plane 300 may, additionally, or alternatively, be configured to provide health monitoring of the chiplet arrangement 100. This may comprise monitoring health of each microservice 400, and/or microsystem 200 and to detecting and advantageously respond to failures or other issues as they arise. This may involve performing automated health checks, restarting failed microsystems 200 and/or microservices 400 and/or triggering alert notifications when issues occur. The control plane 300 may, additionally, or alternatively, be configured to manage updates to the microservices 200 and/or microsystems 400, in order to ensure that new versions of the services are deployed and rolled out in a controlled and safe manner.

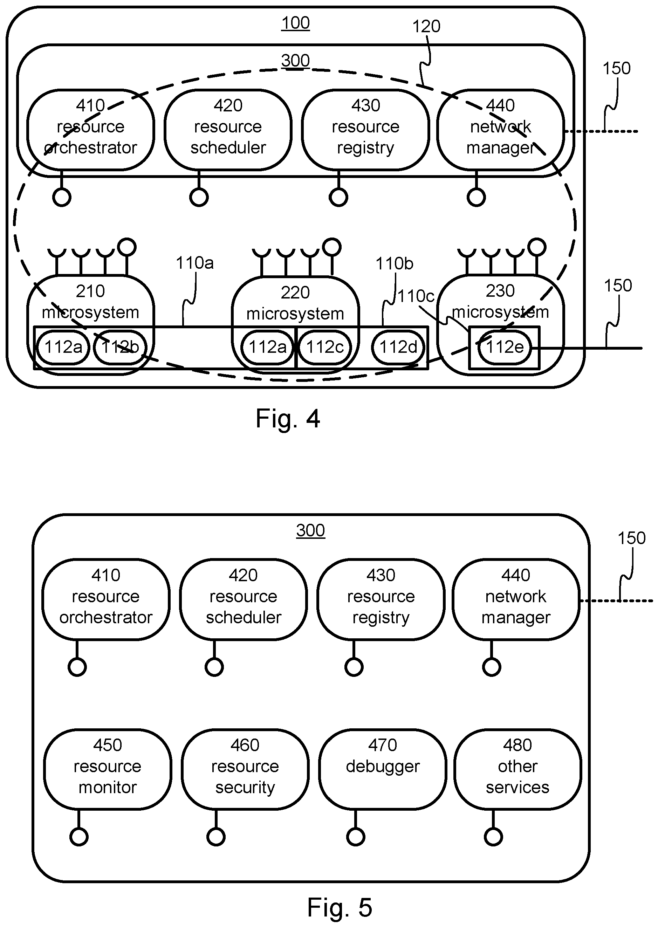

Using an SOA approach in providing the control plane 300, the control plane 300 may be created by a set of microsystems 200 with associated microservices 400. This is schematically shown in Fig. 4. It may be assumed that the control plane 300 is instantiated and executed locally at each chiplet arrangement 100.

With reference to Fig. 4, an exemplary embodiment of a chiplet arrangement 100 comprising an advantageous control plane 300 will be presented. In Fig. 4, the control plane 300 comprises a resource orchestrator 410. The resource orchestrator 410 may be configured for orchestrating and coordinating the integration and instantiation of microsystems 400 and their produced and consumed microservices 200. A microsystem integration may be requested through the resource orchestrator 410 exposed as an associated microservice 410 at the external communications interface 150. Such integration requests may indicate which hardware resources 112 of the chiplet arrangement 100 to integrate and, if applicable, provide any suitable microsystem executable code. In addition, lifetime data ranging from the completion of the first service request to a maximum lifetime may be provided. The maximum lifetime may be determined by e.g. edge or cloud-located ServiceRegistry and SystemRegistry to which the microsystem may have to register. If necessary advanced security on-boarding schema may be deployed, this will be further explained in later sections. It should be mentioned that microsystems 200 of the chiplet arrangement 100 are not necessarily static. That is to say, the microsystems 200 may be formed in a static structure, a dynamic structure, a fluid structure, a flexible layout, an evolving compositions or combinations thereof. Orchestration of microsystems 200 may be dynamically renewed, updated, or changed through new requests to the resource orchestrator 410. The resource orchestrator may provide orchestration information to a network manager 440 of the control plane 300. This may be provided in order to configure suitable communication between integrated hardware resources 112. A service integration request will generally integrate and instantiate a microsystem 200 composed of a set of prescribed hardware resources 112 e.g. CPU, Timer, Memory, ADC, etc.

The resource orchestrator 410 may comprise a preconfigured microsystem 200 of the chiplet arrangement 200 associated with one or more preconfigured microservices 410 of the chiplet arrangement 100. That is to say, the resource orchestrator may be preconfigured. In Fig. 4, the resource orchestrator 410 is shown as a microservice 400. The skilled person will understand that this microservice 410 is associated with a specific microsystem 200. The microservice 400 will be exposed by the control plane 300 and the control plane 300 will provide an interface between the microservice 400 and a specific microsystem 200.

In Fig. 4 the control plane 300 is further shown comprising a resource scheduler 420. The resource scheduler 420 may be provided to ensure a timely availability of a desired microsystem 200. Scheduling of the hardware resources is advantageous in order to achieve a requested performance and obtain a maximum benefit out of a potential of the chiplet arrangement 100. The resource scheduler is advantageously configured to balance a strict real-time requirement with other types of priorities and/or policies. The skilled person will appreciate that such scheduling is dependent on application strategies, policies regulations, etc. A wide range of such scheduling algorithms are available and have been previously published¹ (references in footnote is hereby incorporated in full to give context to the embodiments of this disclosure). From this, resource scheduling may be considered an engineering optimization problem and will not be further detailed in the present disclosure.
¹ S. Singh and I. Chana, "A survey on resource scheduling in cloud computing: Issues and challenges," Journal of Grid Computing, no. DOI 10.1007/s10723-015-9359-2, pp. 217-264, 2016. Z.-H. ZHAN, X.-F. LIU, Y.-J. GONG, J. ZHANG, H. S.-H. CHUNG, and Y. LI, "Cloud computing resource scheduling and a survey of its evolutionary approaches," ACM Computing Surveys, vol. 47, no. 4, July 2015. M. Kumar, S. C. Sharma, A. Goel, and S. P. Singh, "A comprehensive survey for scheduling techniques in cloud computing," Journal of Network and Computer Applications, vol. 143, pp. 1-33, 2019.

It should be mentioned that the resource scheduler 420 may reside either internally or externally to the chiplet arrangement 100. In Fig. 4, the resource scheduler 420 is shown as internal to the chiplet arrangement 100 but this is one alternative, and other implementations may be considered depending on application.

As for the resource orchestrator 410, the resource scheduler 420 may be preconfigured. In Fig. 4, the resource scheduler 420 is shown as a microservice 400, but the skilled person will understand that this microservice 400 is associated with a specific microsystem 200.

The exemplary control plane 300 in Fig. 4 comprises a resource registry 430. The resource registry 430 may be configured to store data pertaining to the hardware resources 112 of the chiplet arrangement 100. Advantageously, the data comprises information indicating one or more of a resource ID of each hardware resource 112, a physical address of each hardware resource 112 of the chiplet arrangement 100 and/or an electrical address of each hardware resource 112 of the chiplet arrangement 100. The resource registry may comprise further data associated with hardware resources of the chiplet arrangement 100, such as resource specification, configurations data and/or meta data. This data is generally generated at design time and advantageously deployed to the resource registry 430 at a chiplet production time. It should be mentioned that the resource registry 430 is not required to comprise data associated with all hardware resources 112 of the chiplet arrangement 100.

In the chiplet arrangement 100 of Fig. 4, the control plane 300 further comprises a network manager 440. The network manager 440 is advantageously configured to dynamically configure network connections of the chiplet arrangement 100. That is to say, the network manager 440 is configured to create communication channels suitable for the microsystems 200 of the chiplet arrangement. The network manager may be configured to interface with a variety of bus technologies, such as, but not limited to, PCI or UCIe. The network manager 440 may further be configured to communicate with a variety of components (hardware resources 112, chiplet network 120, external communications interface 150 etc.) of the chiplet arrangement 100. Advantageously, each chiplet 110 and instantiated microsystem 200 are identified at the external communications interface 150 exposing their associated microservices 400. The network manager is advantageously configured to ensure efficient and reliable communication between internal devices of the chiplet arrangement 100 and between internal devices of the chiplet arrangement 100 and devices external to the chiplet arrangement 100. This may involve measures such as implementation of efficient protocols for transmitting data over the chiplet network 120, minimizing latency, and/or maximizing bandwidth. Further to this, implementation of error correction mechanisms, flow control mechanisms, and mechanisms for handling errors and exceptions may be provided in order to increase efficiency and reliability in communication.

As for the resource orchestrator 410, the network manager 440 may be preconfigured. The microservice 400 will be exposed by the control plane 300 and the control plane 300 will provide an interface between the microservice 400 and a specific microsystem 200. This is illustrated in Fig. 4 by the network manager 440 (the microservice 400 of the control plane) provide an external communications interface 150 on an application level (dotted line in Fig. 4). The physical connection of the external communications interface 150 is provided by a suitable hardware resource 112e which is comprised in a microsystem 230 (solid line in Fig. 4). In Fig. 4, the network manager 440 is shown as a microservice 400, but the skilled person will understand that this microservice 440 is associated with a specific microsystem 200.

The chiplet arrangement 100 of Fig. 4 is an exemplary chiplet arrangement 100 and the features described in reference to Fig. 4 are optional and may be freely combined with each other or any other features described herein.

It should be mentioned that the control plane 300 and/or the microservices 400, 410, 420, 430, 440 may be pre-configured and/or be instantiated or re-configured based on e.g. time scheduling or events.

With reference to Fig. 5, some further exemplary microservices 400 will be presented. In Fig. 5, the control plane 300 of the chiplet arrangement 100 comprises a resource monitor 450 associated with a specific microsystem 200 (not shown in Fig. 5). The resource monitor 450 may be configured to capture a status of a large variety of hardware resources 112 and their current and/or specified capabilities. Consequently, status types and capability types are advantageously part of the metadata registered for each hardware resource 112 in the resource registry 430. The transfer of such status data may be provided by electrical communication or/and through a monitoring microservice request. The resource monitor 450 may be configured to provide access to historical data. Historical data may be accessed in order to proceed with e.g., predictive maintenance, optimization etc. Advantageously, the historical data is available only for a limited time, generally determined by a capacity of a storage in relation to an amount of historic data that is generated. The resource monitor 450 advantageously resides in the chiplet arrangement 100 in order to enable appropriate monitoring of its hardware resources 112.

In Fig. 5, the control plane 300 of the chiplet arrangement 100 further comprise a resource security microservice 460 (labeled "resource security" in Fig. 5 for brevity) associated with a specific microsystem 200 (not shown in Fig. 5). Generally, some form of security is advantageous in most applications. Dependent on application requirements and hardware capabilities chiplet security measures of interest may comprise one or more of physical tampering detection, encryption of data transferred over the chiplet electrical communication (chiplet network 120 etc.), secure on-boarding of software, enabling e.g. over the air (OTA) software updates, secure on-boarding of hardware, etc. Such security issue detection and actions are advantageously initiated and monitored by the resource security microservice 460. Advantageously, any available security issue detection and action types offered by the resource security microservice 460 may form part of the metadata registered in the resource registry 430.

In Fig. 5, the control plane 300 of the chiplet arrangement 100 further comprises a debugger 470 with an associated microsystem 200 (not shown in Fig. 5). The debugger 470 is advantageous in order to support e.g. test and validation of the chiplet arrangement 100, the control plane 300 and instantiated microsystems 200. The debugger 470 may be configured to trace the execution of software instructions in real-time, allowing developers to identify potential issues with hardware access, timing, and/or synchronization. The debugger 470 may be configured to monitor memory access in real-time, allowing developers to detect and diagnose issues with memory corruption, buffer overflows, or other memory-related issues. The debugger 470 may be configured to inspect values of hardware registers of one or more hardware resources 112 in real-time (runtime), allowing developers to diagnose issues related to hardware configuration or control. The debugger 470 may be configured to set breakpoints and/or watch points at specific points in program instructions or at memory addresses, allowing developers to halt execution and inspect the system state at critical points. The debugger 470 may be configured to provide detailed performance profiling information, allowing developers to identify performance bottlenecks and optimize code for better hardware utilization.

As mentioned, the above exemplified microservices 400 and associated microsystems 200 are provided for explanatory purposes and should in no way be construed as limiting. As indicated in Fig. 5, the control plane 300 may very well comprise other microservices 480 (labeled "other services" in Fig. 5 for brevity) with associated microsystems 200. The examples presented in reference to e.g. Figs. 4 and 5 may be freely combined with each other.

Generally, dynamic instantiation refers to an ability to create and configure instances of a design or component during run-time. In the present disclosure and associated architecture, it refers to an ability to dynamically create and configure instances of microsystems 200. The use of dynamic instantiation will allow for flexibility and scalability in system design, as it allows for the creation of customized microsystems 200 on demand and may further reduce costs by allowing for the reuse of existing chiplets 110. To this end, the chiplet arrangement 100 is advantageously configurable to host one or several microsystems 200. Each microsystem 200 is configured to produce and/or consume one or more microservices 400. Advantageously, such microsystems 200 are configured to instantiate dynamically during run-time. To enable such instantiating the chiplet arrangement 100 may be configured to expose its hardware resources 112 and their allocation to integrated microsystems and their current usage status/availability.

Consequently, in order to instantiate a microsystem 200, the chiplet arrangement 100 is advantageously configured to, in run-time (throughout a lifetime of the chiplet arrangement 100), dynamically integrate the chiplets 110 and necessary program instructions to form microsystems 200 and associated produced and/or consumed microservices 400 of the microsystems 200. In addition, the architecture allows for the usage of resources allocated to microsystems that are not in operation. This is provided by the control plane 300 of the present disclosure.

Microservices 400 are exposed on the chiplet network 120 and/or the external communications interface 150 through the network manager 440. The network manager 440 is advantageously configured to provide the chiplet arrangement 100 with an IP address making it reachable at the external communications interface 150. The network manager 440 is advantageously configured to provide capabilities to also communicate locally with other chiplets 110 in the same chiplet arrangement 100. The control plane 300 allows the orchestration and registry of the microservices 200. The control plane 300 is based on SOA principles; a well-established technology which, therefore, is only briefly covered here.

System of Systems (SoS) functionality refers to collective behavior and capabilities of a group of interconnected software systems, which together form a larger, more complex system. SoS functionality is concerned with how these individual systems work together to achieve a common goal or set of goals, and how they communicate and share information in order to achieve this. This comprises issues such as interoperability, data exchange, and system integration. SoS functionality is generally important in large-scale software systems, where multiple independent systems need to work together in order to achieve a common objective. As the skilled person appreciates, effective SoS functionality requires careful design and planning, as well as robust communication protocols and system interfaces to ensure that each system is able to interact effectively with the others.

To integrate the chiplet arrangement 100 into a SoS functionality, the foundational look-up, loosely coupled and late binding properties of the SOA are advantageously supported by the SoS functionality. Eclipse Arrowhead architecture is a commonly known SOA architecture example and reference implementation that may provide a basic control plane meeting SOA principles like look-up, late binding, loose coupling, and security measures e.g. authentication, authorization, etc., and optional security measures, interoperability measures etc. As an example, the basic control plane capabilities are provided in the Eclipse Arrowhead architecture reference implementation by the mandatory/highly recommended microsystems ServiceRegistry system (look-up), Orchestration system (late binding, loosely coupled) and Authorisation system (authorization, authentication). The SoS functionality may provide these features by (based on Eclipse Arrowhead terminology):
- a ServiceRegistry and an associated ServiceDiscovery microservice
- an Orchestration system and its associated Orchestration microservice, i.e. the resource orchestrator 410 and its associated microsystem 200.
- AA security (Authenticating, Authorisation) may be provided by an Authorization system and an associated microservice GetPublicKey.
- Additional control plane 300 services like e.g. on-boarding security, interoperability translators and adaptors, workflow management and execution² (reference in footnote is hereby incorporated in full to give context to the embodiments of this disclosure), autonomous SoS maintenance and re-engineering³ (reference in footnote is hereby incorporated in full to give context to the embodiments of this disclosure).
   ² "Workflow management solutions based on microservices," Applied Sciences. ³ A. N. Lam, O. Haugen, and J. Delsing, "Dynamical orchestration and configuration services in industrial iot systems: An autonomic approach," IEEE Open Journal of the Industrial Electronics Society, vol. 3, pp. 128-145, 2022.

The incredible flexibility of a chiplet arrangement 100 as present above present challenges for developers seeking to take advantage of this flexibility. For instance, late

binding, i.e. association of resources at runtime rather than compile time, and loosely coupled services, i.e. individual components or modules operate independently and have little or no dependencies on each other, from a software perspective is well know. But when late binding and loosely coupled services are applied also to hardware as in the chiplet arrangement 100 presented herein, modeling, optimization, verification and validation of microsystems 200 (i.e. hardware/software combinations) becomes challenging.

The inventors behind the present disclosure have identified this challenge and the following sections will provide a method for simulating (modeling) a requested service on a chiplet arrangement 100. The simulation may be utilized to provide a microsystem 200 for deployment on the chiplet arrangement 100. The simulation may be utilized to validate the hardware and/or software functionality of the requested service. The simulation may be utilized to optimize an implementation (i.e. the associated microsystem 200) of the requested service from a hardware and/or software perspective. The simulation may be utilized to determine a utilization and/or a workload the requested service adds to the chiplet arrangement 100. It should be mentioned that, although the method will be explained in a context of a requested service, the teachings may be amended and adapted also for other context such as simulation or optimization of a chiplet arrangement 100 hosting one or more microsystems 200.

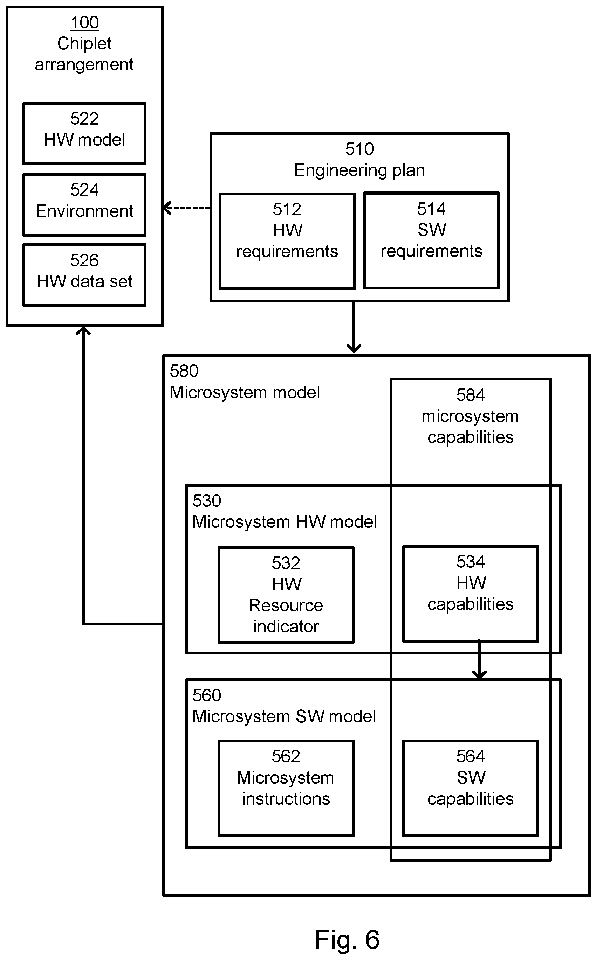

In Fig. 6, a simplified block diagram of providing a microsystem model 580 from a specific chiplet arrangement 100 is shown. The overview given with reference to Fig. 6 is an introduction to providing the microsystem model 580 and each step and feature will be further explained in coming sections. The flow is initiated by an engineering plan 510. The engineering plan 510 may be obtained as part of a service request. The engineering plan 510 specifies requirements of a service requested from the specific chiplet arrangement 100. In some examples, the engineering plan 510 specifies a services demanded by a user/operator of a chiplet arrangement 100. The specified service is a service that, assuming requirements are met, will be deployed and served on the specific chiplet arrangemen 100. The requested service may be anything suitable for the chiplet arrangement 100 such as obtaining a temperature at specific intervals, identifying persons in video images, controlling a heating system based on a provided AI model, implementing autonomous drive in a vehicle etc. Based on the engineering plan 510, a microsystem hardware model 530 is provided. The microsystem hardware model 530 specifies one or more hardware resources 112, e.g. specific chiplets 110 of the chiplet arrangement 100 required for providing the requested service, or advantageously required hardware services. To this end, the microsystem hardware model 530 comprises a hardware resource indicator 532 indicating what hardware resources 112 or hardware services of the chiplet arrangement 110 the microsystem hardware model 530 comprises models of. The hardware resource indicator 532 may indicate specific hardware resources 112, but advantageously, to wholly enable dynamic instantiation of microsystems 200, the hardware resource indicator 532 indicate hardware services. For instance, if the service is identifying persons in video images, an image obtaining hardware resource, a processing hardware resource and a memory hardware resource may be required and specified by the hardware resource indicator 532. These microsystem hardware resources 112 may be from the same chiplet 110 or from different chiplets 110. The microsystem hardware model 530 is simulated using hardware simulation tools and the outcome of this simulation provides one or more hardware capabilities 534 of the microsystem hardware model 530. The hardware capabilities 534 are used to estimate a microsystem software model 560. The microsystem software model 560 comprises microsystem program instructions 562 (labeled "microsystem instructions" in Fig. 6 for brevity). The microsystem software model 560 is simulated on an environment 524 of the chiplet arrangement 100. Based on these simulations, a microsystem model 580 is provided. The microsystem model 580 comprises the microsystem hardware model 520, the microsystem software 560 and one or more microsystem capabilities 584 based on the hardware and software capabilities 534, 564, resulting from the simulations of the respective models 530, 560.

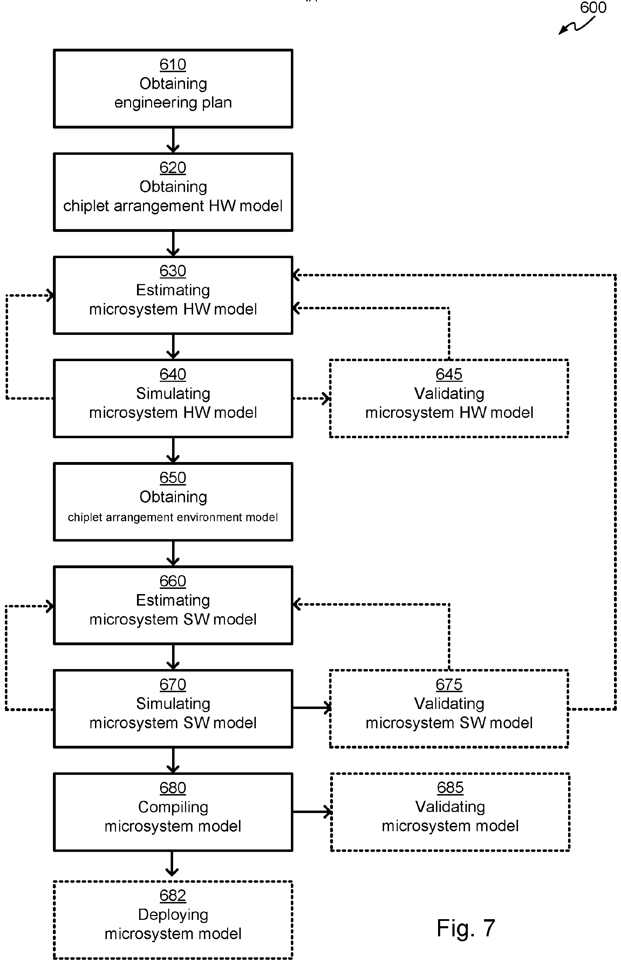

In Fig. 7, an exemplary method 600 according to the present disclosure is shown. The method 600 shown in Fig. 7 may be implemented as a computer implemented method or a partly computer implemented method where some tasks are wholly or partly manually performed. It should be mentioned that many of the features mentioned in reference to the method 600 are optional.

The method 600 comprises obtaining 610 the previously mentioned engineering plan 510. The service requested may be defined by specifying a functionality of the service, interfaces of the service, and how it interacts with other components, services and devices. The requested service may be described in broad, functional terms such as "control the ambient temperature within 1 % of a set value" but such broadly requested services will require some processing in order to provide an engineering plan 510. As mentioned, the engineering plan 510 generally comprises hardware requirements 512 and software requirements 514. Although the method 600 will be described with an engineering plan 510 comprising both software requirements 514 and hardware requirements 512, it should be mentioned that some services may be definable with solely hardware requirements 512 or software requirements 514. After reading the present disclosure, the skilled person will be clear on how to adjust the method 600 for only hardware requirements 512 or only software requirements 514 and this disclosure should not be construed as limited to hardware requirements 512 in combination with software requirements 514.

The engineering plan 510 and associated hardware requirements 512 and software requirements 514 describe, at some level, a functionality and requirements of a specific microsystem 200 for producing and/or consuming one or more microservices 400.

The engineering plan 510 may be obtained in any suitable way, compiled in any suitable format, but comprise at least an indication of a service requested by a specific chiplet arrangement 100. The engineering plan 510 is generally provided by a user, and advantageously considers chiplet resources and the desired functionality. The engineering plan may comprise specifications, code, configurations, and optionally test cases.

The hardware requirements 512 may be formatted freely and generally depend on the service (microservice 400) and/or functionality defined by the engineering plan 510. In some examples, the hardware requirements 512 may be provided in an XML or similar formats, but any data set suitable for describing parameters and limits may be utilized. There are many commonly known formats for defining software requirements 514 that may be employed in defining the DW requirements 514 such as, but not limited to, Service Description Language (SDL), Interface Definition Language (IDL), RESTful API Documentation, YAML or JSON Config Files, Domain-Specific Languages (DSLs) etc.

The hardware requirement 512 may provide requirements for any suitable hardware related parameter. In some examples, the hardware requirement 512 may be broken down into a set of hardware constraints. The constraints may comprise physical constraints, connectivity constraints, availability constraints etc. The physical constraints may comprise constraints relating to one or more of a physical size, a power consumption, a heat dissipation, manufacturing capabilities of the chiplets etc. The connectivity constraints may comprise constraints relating to one or more of a bandwidth, a latency, a reliability of inter-chiplet connections, a supply voltage, a supply current, etc. The availability constraints may comprise constraints relating to one or more of an availability and/or allocation of hardware resources such as, but not limited to, processing cores, memory blocks, I/O interfaces etc.

Correspondingly, the software requirements 514 may provide requirements for any suitable software related parameter. In some examples, the software requirement 514 may be broken down into a set of software constraints. The constraints may comprise one or more of compatibility constraints, performance constraints, security constraint etc. The compatibility constraints may be provided to ensure software compatibility with the hardware. The compatibility constraints may comprise constraints relating to one or more of instruction set architecture (ISA), memory access patterns, I/O protocols etc. The performance constraints may comprise constraints relating to one or more of processing speed, memory usage, overall efficiency etc. The security constraints may comprise constraints relating to one or more of secure boot, encryption, secure communication protocols etc.

The method 600 further comprises obtaining 620 a chiplet arrangement hardware model 522. The chiplet arrangement hardware model 522 is a model of the chiplets 110 of the chiplet arrangement 100. The chiplet arrangement hardware model 522 is not required to comprise hardware models of all chiplets 110 of the chiplet arrangement 100, it may suffice to obtain a chiplet arrangement hardware model 522 comprising hardware models of chiplets 110 deemed necessary to fulfill the engineering plan 510. Further to this, not all chiplets 110 of the chiplet arrangement 100 that are part of the chiplet arrangement hardware model 522 need to be modeled with the same accuracy. For instance, some chiplets 110 may be modeled as simple black boxes with e.g. impedances at ports while other chiplets 110 may be more accurately modeled with details of traces, components (e.g. semiconductors, passives etc.) or their respective physical locations.

The chiplet arrangement hardware model 522 describes an electrical environment of at least a part of the chiplet arrangement 100. The electrical environment may relate to any conditions and/or factors that influence the behavior and performance of electric circuitry of the chiplet arrangement 100, i.e. of the chiplets 110 and/or their interconnection. The electrical environment may comprise any suitable elements within and/or around the chiplet arrangement 100 that may impact operation of the chiplet arrangement 100. Non-limiting examples of data that the electrical environment may describe are voltage sources (presence and characteristics of voltage sources, such as voltage levels, waveforms, etc.), current sources (presence and characteristics of current sources, such as magnitude, direction, etc.), resistors, capacitors, inductances, circuit resistances, circuit capacitances (e.g. time constants), circuit inductances, operating frequencies, temperature, noise, interferences, etc.

The chiplet arrangement hardware model 522 may be provided in any suitable format and different chiplets 110 of the chiplet arrangement 100 may be modeled differently. In some examples, one or more chiplets 110 or parts of chiplets 110 may be modeled as Simulation Program with Integrated Circuit Emphasis (SPICE) models. Additionally, or alternatively, one or more chiplets 110 or parts of chiplets 110 may be modeled as FEM-models for electromagnetic simulations. Additionally, or alternatively, one or more chiplets 110 or parts of chiplets 110 may be modeled as system level simulink models. Additionally, or alternatively, one or more chiplets 110 or parts of chiplets 110 may be modeled as models for Quite Universal Circuit Simulator (Qucs). Additionally, or alternatively, one or more chiplets 110 or parts of chiplets 110 may be modeled as HSPICE models. Additionally, or alternatively, one or more chiplets 110 or parts of chiplets 110 may be modeled as models for OpenModelica.

As mentioned, the type of model(s) provided by the chiplet arrangement hardware model 522 may depend on the engineering plan 510. The type of model(s) provided by the chiplet arrangement hardware model 522 may, additionally or alternatively, depend on requirements relating to accuracy of the microsystem model 680, time requirements for preparing the microsystem model 680, processing requirements for preparing the microsystem model 680, etc.

The method 600 further comprises estimating 630 a microsystem hardware model 530. The microsystem hardware model 530 is estimated based on the engineering plan 510, and advantageously, if available, the hardware requirements 512 of the engineering plan 510 but also software requirements of the engineering plan 510, and a hardware data set 526 of the chiplet arrangement 100. The hardware data set 526 specifies hardware resources 112 of the chiplet arrangement 100, i.e. lists what hardware the chiplet arrangement 100 comprises. The hardware resources 112 listed in the hardware data set 526 may correspond to those hardware resources 112 in the resource registry 430. However, advantageously, the hardware data set 526 is a wider definition of hardware resources 112 not limited to those currently available to the control plane 300 of the chiplet arrangement 100. In some examples, the microsystem hardware model 522 and the microsystem hardware data set 526 describe the same or corresponding hardware resources 112 of the chiplet arrangement 100.

The microsystem hardware model 530 details (to a level) what specific hardware resources 112 of the chiplet arrangement 100 that the microsystem model 580 may require. The microsystem hardware model 530 may be estimated by mapping the hardware requirements 512 to hardware resources 112 of the chiplet arrangement 100. The microsystem hardware model 530 may be estimated by manually, automatically, or a combination thereof, picking specific hardware resources 112 of the hardware data set 526 that fulfill the hardware requirements 512. To exemplify, estimating the microsystem hardware model 530 may comprise selecting specific processing circuitry of the chiplet arrangement 100, specific persistent and non-persistent storage circuitry of the chiplet arrangement 100 and specific sensor circuitry of the chiplet arrangement 100. In some examples, estimating the microsystem hardware model 530 may comprise selecting one specific chiplet 110 of the chiplet arrangement 100 comprising hardware resources 112 in the form of suitable processing circuitry, suitable storage circuitry and suitable sensor circuitry. The microsystem hardware model 530 consequently comprises models of the hardware resources 112 relevant for the engineering plan 510, optionally including affected hardware resources 112 not directly connected to the hardware resources 112 relevant for the engineering plan 510.

As the microsystem hardware model 530 is estimated based on the engineering plan 510, the microsystem hardware model 530 may not only specify the actual hardware resources 112 that the microsystem model 580 will use, but also further hardware resources 112 that may be electrically affected by the added service of the engineering plan 510. This may include crosstalk between hardware resources 112, ripple induced or injected on supply lines etc.

It should me mentioned that in examples wherein one or more chiplets 110 of the chiplet arrangement 100 comprise configurable hardware, such as FPGAs and/or CPLDs, the hardware model 530 may be configured to specify configurations of the configurable hardware.

Specific chiplet arrangements 100 and/or specific hardware resources 112 may be manually (or automatically) selected as an initial microsystem hardware model 530. As will be explained in coming sections, the microsystem hardware model 530 may be iteratively selected and/or several microsystem hardware models 530 may be estimated.

The method 600 further comprises simulating 640 the estimated microsystem hardware model 530. The simulation is consequently a simulation of a hardware environment of the chiplet arrangement 100 and may be described as an electrical simulation or a hardware simulation. The hardware simulation may be provided using any suitable simulation tool or simulation tools. The hardware simulation is not necessarily provided by one simulation using one hardware simulation tool since different hardware simulation tools and methodologies may be adapted to simulate different aspects of the hardware.

The simulation may be performed by obtaining relevant hardware models from the chiplet arrangement hardware model 522 based on the microsystem hardware model 530. Depending on a desired accuracy of the simulation, the simulation may be expanded to not only include hardware resources 112 specified by the microsystem hardware resource indicator 532, but also further hardware resources 112 affected by those hardware resources 112 specified by the microsystem hardware resource indicator 532. To this end, and depending on a desired accuracy of the microsystem model 580, the hardware simulation may further comprise hardware resources 112 physically proximal to the hardware resources 112 specified by the microsystem hardware resource indicator 532.

The different hardware models from the chiplet arrangement hardware model 522 may be modeled together using e.g. virtual prototyping tools and techniques. Virtual prototyping allows creation of a functional software model of a system (the microsystem hardware model 530), which can be used for e.g. simulation and testing. Some non-limiting examples of virtual prototyping tools comprise Synopsys Virtualizer for creating virtual prototypes of systems, including those with microcontrollers and ASICs, and Cadence Virtual System Platform for creating virtual prototypes for systemlevel simulation and software development.

As mentioned, the hardware simulation may be performed using any suitable tool and is advantageously aligned with the hardware models obtained from the chiplet arrangement hardware model 522. Simulating 640 the microsystem hardware model 530 may comprise SPICE simulations. SPICE simulates behavior of electronic circuits, such as resistors, capacitors, inductors, transistors, and other components. Additionally, or alternatively, simulating 640 the microsystem hardware model 530 may comprise FEM simulations. FEM simulations enable modelling of complex geometries and simulation of electromagnetic fields, antennas, RF components, crosstalk etc. Simulating 640 the microsystem hardware model 530 may comprise HSPICE simulations. HSPICE simulations are commonly used for circuit simulations, especially in the field of semiconductor device modeling. For instance in case of Hardware Description Language (HDL) Simulators for FPGA, ModelSim or Vivado may be configured to simulate VHDL/Verilog code. In case of simulators for ASICs (including RFIC and MMIC), suites such as Cadence or Synopsys may be employed. In case of microcontroller Simulators, e.g. Arduino, may be simulated using tools like Proteus or simulators within the Arduino IDE. Microprocessor simulators may be simulated using QEMU or other high-level simulators.

The above simulation tools are given as examples, and further electrical simulation tools such as, PLECS, HOMER Pro, OrCAD PSpice, Sonnet, ADS (Advanced Design System) by Keysight, Proteus, NI Multisim, EMTP-RV (Electromagnetic Transients Program), PowerWorld Simulator, Tanner Tools (Tanner EDA), Xyce, QuickField, TINA-TI (Texas Instruments), Elmer, SaberRD (Saber), etc. are well within the scope of the present disclosure. The skilled person will know which simulation tool(s) are suitable depending on application and/or purpose.

If more than one hardware simulation tool is utilized, co-simulation may be employed. Co-simulation involves the use of multiple simulation tools in parallel, where each tool simulates a part of the system. During the simulation, the hardware simulation tools exchange data. In order to allow sharing of data between the hardware simulation tools, a data exchange service is generally provided. The data exchange service may be a service using Inter-Process Communication (IPC), network sockets, or file-based communication for data exchange between different simulation tools.

Outputs from the hardware simulation may vary depending on the type of simulation performed and specific goals of the simulation. The output from the hardware simulation may be exemplified by, but not limited to: waveforms e.g. timedomain waveforms (voltage and/or current waveforms over time) or frequency-domain waveforms (signals represented in frequency domain); AC and/or DC analysis results e.g. steady-state analysis (information about behavior of circuitry at a stable state, may include DC operating points) or AC analysis (frequency response, gain, phase shift, and other AC characteristics); transient analysis results e.g. transient response (behavior over time in response to changes, such as input signal transitions) or rise and fall times (slew rate, duration for signals to transition between specific voltage levels); S-Parameters (Scattering parameters that describe how electrical signals are scattered or transmitted through a network); power dissipation and/or loss analysis (information about power consumption, dissipation, and losses in various components of the circuit); harmonic analysis (identification and analysis of harmonic components in signals); thermal analysis results (information regarding temperature distribution and thermal behavior) etc. The simulation result may be comprise results from software sweeping one or more parameters of the microsystem hardware model 530 and/or statistical measures of the simulated data.

The outputs from the hardware simulation are processed to obtain one or more hardware capabilities 534. The hardware capabilities 534 generally comprise data corresponding, at least to a degree, to the hardware requirements 512. That is to say, if the hardware requirements 512 specify a maximum current consumption, the hardware capabilities 534 advantageously comprise data indicating a maximum current consumption of the microsystem hardware model 530. The hardware capabilities 534 may comprise more or fewer hardware metrics than the hardware requirements 512.

Optionally, in some examples, the method 600 may comprise validating 645 the microsystem hardware model 530. Validation of the microsystem hardware model 530 may comprise determining whether the hardware capabilities 534 provided by the hardware simulation meet requirements specified in the engineering plan 510. In examples wherein the engineering plan comprises one or more test cases, the validation of the microsystem hardware model 530 advantageously comprises determining whether the microsystem hardware model 530 passes the one or more test cases or not. A result of the validation of the microsystem hardware model 530 may be provided as hardware validation data.

In some examples, the method 600 may comprise repeating the estimating 630 of the microsystem hardware model 530 if the microsystem hardware model 530 fails the validation. In such examples, one or more alternative microsystem hardware models 530 may be estimated 630 and simulated 640 based on the microsystem hardware capabilities 534 of the initial microsystem hardware model. This will provide alternative microsystem hardware capabilities 534 that in turn may be validated 645 to determine whether they meet the requirements of the engineering plan 510 or not.

Additionally, or alternatively, the method 600 may comprise providing one or more alternative microsystem hardware models 530 regardless of validation of the microsystem hardware model 530 (if performed).

Due to the general flexibility of a chiplet arrangement 100 in the allocating hardware resources 112 for a microsystem 200, the above iterative approach enables several different hardware configuration to be evaluated. This makes it possible to select a microsystem hardware model 530 that best meet certain requirements. To this end, even if no validation is performed, several different microsystem hardware models 530 may be estimated and simulated. The hardware capabilities 534 may be compared to optimize on certain design parameters for the chiplet arrangement 100 such as current consumption, heat dissipation etc.

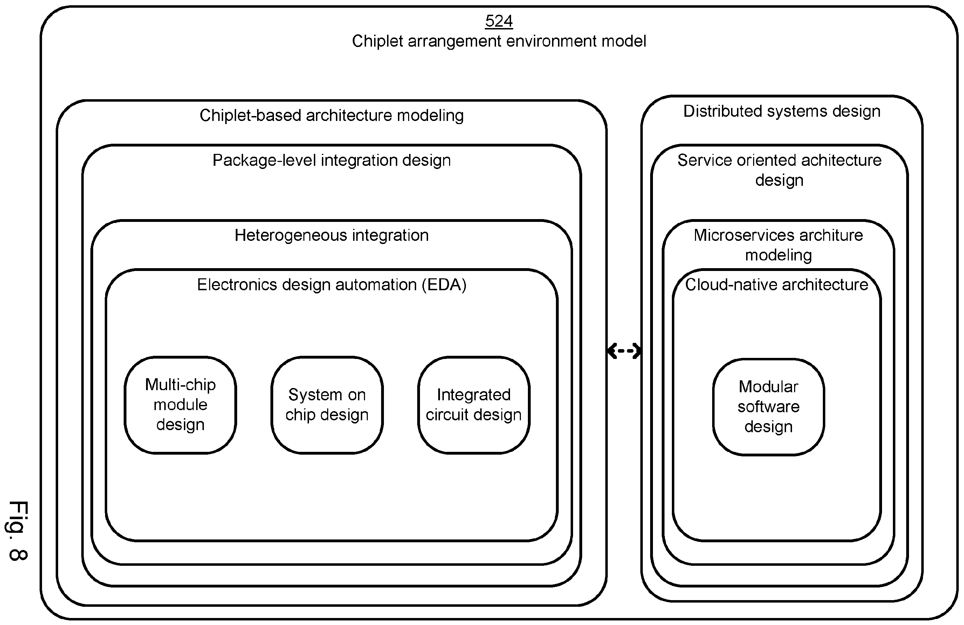

Regardless if an iterative approach is adopted or not, the method 600 comprises obtaining 650 a chiplet arrangement environment model 524 of the chiplet arrangement 100 and deployed software. The chiplet arrangement environment model 524 may describe a software environment of the chiplet arrangement 100 in any suitable way. The chiplet arrangement environment model 524 may comprise a software software design description. In some examples, the chiplet arrangement environment model 524 is a digital twin of the chiplet arrangement 100. The chiplet arrangement environment model 524 will be further explained in reference to Fig. 8.

The method 600 further comprises estimating 660 a microsystem software model 560 based the hardware capabilities 534 and the software requirements 514. The microsystem software model 560 comprises the produced and/or consumed microservices 400 of the microsystem 200. The microsystem software model 560 may be modeled, in e.g. SysML, UML, Modelica, Matlab, etc. Advantageously, the microsystem software model 560 is modeled to a level of detail that enables machine generation of microsystem program instructions 562, i.e. program code. The microsystem program instructions 562 are configured to control the hardware resources 112 of the chiplet arrangement 100 indicated by the hardware resource indicator 532. The microsystem program instructions 562 are, in some examples, configured to control the hardware resources 112 of the chiplet arrangement 100 to provide the service specified in the engineering plan 510.

It should me mentioned that in examples wherein one or more chiplets 110 of the chiplet arrangement 100 comprise configurable hardware, such as FPGAs and/or CPLDs, the software model 560 may be configured to model configurations of the configurable hardware.

The method 600 further comprises simulating 670 the estimated microsystem software model 560. Based on the microsystem software model 560, the specific microsystem 200 and associated services (produced and/or consumed microservices 400) may be manually or automatically coded to executable code. Thereby, microsystem 200 functionality simulation and validation may be made on any hardware including hardware similar (with regards to e.g. CPU, memory, I/O etc.) to hardware of the intended chiplet arrangement 100. Such validation may be made using containers, Virtual Machine (VM), Docker, Kubernetis or other approaches and tools. Simulation of the microsystem software model 560 may be based on the chiplet arrangement environment model 524 and the microsystem software model 560. To exemplify, in some examples, the chiplet arrangement environment model 524 may be a physical chiplet arrangement 100 having deployed thereon a software environment. In such examples, simulating the microsystem software model 560 may comprise executing the estimated microsystem program instructions 562 on the chiplet arrangement 100. In some examples, a chiplet arrangement 100 may not be physically available and in those cases, simulating the microsystem software model 560 may comprise executing the estimated microsystem program instructions 562 on hardware similar to that of the chiplet arrangement running a software similar to software specified by the chiplet arrangement environment model 524.

The output(s) from the software simulation are processed to obtain one or more software capabilities 564. The software capabilities 564 may be any suitable capability covering any suitable capability within any suitable applications and specific needs within any field including real time control, state machine execution, etc. Some non-limiting exemplary software capabilities 564 comprise data filtering and/or analytics, application of AI/ML algorithms to data, clustering of data using AI/ML, signal processing of various kinds, digital control, closed loop control, workflow management, event handling, interrupt handling, functionality, QoS, status estimation/reporting, monitoring, resilience monitoring and/or mitigation, etc. The software capabilities 564 generally comprise data corresponding, at least to a degree, to the software requirements 514. That is to say, if the software requirements 514 specify a maximum memory usage, the software capabilities 564 advantageously comprise data indicating a maximum memory consumption of the microsystem software model 560. The software capabilities 564 may comprise more or fewer software metrics than the software requirements 514.

Optionally and corresponding to the microsystem hardware model 530, in some examples, the method 600 may comprise validating 675 the microsystem software model 560. Validation of the microsystem software model 560 may comprises determining whether the software capabilities 564 provided by the software simulation meet requirements specified in the engineering plan 510. In examples wherein the engineering plan comprise one or more test cases, the validation of the microsystem software model 560 advantageously comprise determining whether the microsystem software model 560 passes the one or more test cases or not. A result of the validation of the microsystem software model 560 may be provided as software validation data.

In some examples, the method 600 may comprise repeating the estimating 660 of the microsystem software model 560 if the microsystem software model 560 fails the validation. In such examples, one or more alternative microsystem software models 560 may be estimated 630 and simulated 640 based on the microsystem software capabilities 564 of the initial microsystem software model 560. This will provide alternative microsystem software capabilities 564 that in turn may be validated 675 to determine whether they meet the requirements of the engineering plan 510 or not.

Additionally, or alternatively, the method 600 may comprise repeating the estimating 630 of the microsystem hardware model 530 if the microsystem software model 560 fails the validation. As outlined above, this means that a fault in validation of the microsystem software model 560 may cause estimation of an alternative microsystem hardware model 530.

Additionally, or alternatively, the method 600 may comprise providing one or more alternative microsystem software models 560 regardless of validation of the microsystem software model 560 (if performed).

The above iterative approach enables several different microsystem software models 560 each based on respectively different microsystem hardware models 530 and/or comprising respectively different microsystem program instructions 562. This allows for selection of a microsystem software models 560 that best meets certain requirements. To this end, even if no validation is performed, several different microsystem software models 560 may be estimated and simulated. The software capabilities 564 may be compared to optimize on certain design parameters for the chiplet arrangement 100 such as current memory utilization, latency, bandwidth, etc.

The method 600 further comprises compiling 680 the microsystem hardware model 530 with associated hardware capabilities 534 and the microsystem software model 560 with associated software capabilities as a microsystem model 580 comprising microsystem capabilities 584. Compiling 680 may comprise one or more of a lexical analysis, a syntax analysis, a semantic analysis, code generation, etc. of the microsystem hardware model 530 with associated hardware capabilities 534 and the microsystem software model 560 with associated software capabilities. The output microsystem model 580 comprising microsystem capabilities 584 may be in a format that is configured for deployment on the chiplet arrangement 100. In some examples, the compiling 680 may be described as integrating the microsystem hardware model 530 with associated hardware capabilities 534 and microsystem software model 560 with associated software capabilities into a microsystem model 580 comprising microsystem capabilities 584. The compiling and integrating may be used interchangeably and the choice of word will generally depend on the format and levels of the microsystem hardware model 530, the microsystem software model 560, the microsystem model 580, the hardware capabilities 534, the software capabilities and the microsystem capabilities 584.

Optionally, in some examples, the method 600 may comprise validating 685 the microsystem model 580. Validation of the microsystem model 580 may comprise validating the effect that the microsystem model 580 has on the chiplet arrangement 100. Validating the microsystem model 580 may comprise determining a utilization of hardware resources 112 of the chiplet arrangement 100. In some examples, validating the microsystem model 580 may comprise determining a change in utilization of hardware resources 112 of the chiplet arrangement 100 with and without the microsystem model 580.

Although not indicated in Fig. 7, the compiling 680 of the microsystem model 580 may also be iterative, either based on validation 685 outcome or not, such that alternative microsystem models 580 may be provided based on alternative microsystem hardware models 530 and/or alternative microsystem software models 560.

It should be mentioned that, validation 685 of the microsystem model 580 may result in the engineering plan 510 having to be reworked, and/or a different chiplet arrangement 100 being targeted with the engineering plan 510. This is also applicable if the validation 645 of the microsystem hardware model 530 or the validation 675 of the software model 560 fails.

Optionally, in some examples, the method 600 may comprise deploying 682 the microsystem model 580 on the chiplet arrangement 100.

The features of the method 600 have been explained in a specific order for the sake of explanation. The different features of the method 600 may be performed in any suitable order and several of the features may be performed in parallel.

The method 600 described herein allows for modeling of a microsystem 200 for a specific chiplet arrangement 100. In some examples, the method 600 may further provide a validated microsystem 200, with regards to hardware and/or software validated, for a specific chiplet arrangement 100. In some examples, the method 600 may provide, based on the engineering plan 510, a microsystem 200 adapted with regards to hardware and/or software for a specific chiplet arrangement 100.

The microsystem model 580 may be described as the microsystem recipe that may dynamically instantiated on a chiplet arrangement 100 at runtime. As indicated above, dynamic allocation of resources for the instantiation of more than one microsystem 200 at runtime is possible due to the combined use of the resource scheduler 420 and network manager 440. As explained above, during design time, shared usage of a given resource for two microsystems 200 may be simulated and optionally tested and/or validated. However, there may be certain limitations in terms of network availability and latency. To exemplify, assume a microsystem A that uses resource 1 and 2 and microsystem B that uses resource 2 and 3. If the microsystems do not need to use the resource 2 continuously, time slots may be used to schedule when the resource 2 will be available for the microsystems A and B. The network needs to be configured according to this schedule and changed at runtime. In the same way, for a given microsystem 200, the allocation of a resource may be changed and updated at runtime, if the hardware and software limitations allow it. The method 600 presented in reference to Fig. 6 allows for simulation of such complex functioning and may provide feasibility of the given microsystem 200.

In Fig. 8, an exemplary software architecture of a chiplet arrangement environment model 524 is shown. The chiplet arrangement environment model 524 in Fig. 8 is one non-limiting example and is provided to present a conceptual idea of some hierarchies of the chiplet arrangement environment model 524. The hierarchies in Fig. 8 are hierarchies known to the skilled person and each hierarchy will only be briefly and generally explained. Although the hierarchies are described in an order, any one or more of the hierarchies may be left out without affecting other hierarchies. In Fig. 8, the chiplet arrangement environment model 524 comprises models of both the hardware and the software that are coupled.

The hardware models may be described by chiplet-based architecture modeling that may comprise package-level integration design, that may comprise heterogeneous integration that may comprise electronic design automation (EDA) that may comprise one or more of multi-chip module design, system on chip (SoC) design or integrated circuit (IC) design. Package-level integration design may refer to a process of designing and organizing integration of various hardware components within a system at package level. A package, in this context, is a higher-level abstraction that encapsulates multiple hardware components, such as integrated circuits, modules, or subsystems, into a cohesive unit. Package-level integration design may involve defining structures, connectivity, and interfaces at a higher level of abstraction. Heterogeneous Integration may refer to design and integration of diverse types of components, technologies, or materials within a single hardware system. This approach may involve combining various elements with different properties, functionalities, or manufacturing processes to achieve improved overall system performance or capabilities. EDA is a category of software tools that may be used for designing and modeling electronic systems and integrated circuits (ICs). EDA tools are generally utilized throughout an entire electronic design process, from conceptualization and schematic capture to simulation, layout, and verification. These tools facilitate the efficient design, analysis, and manufacturing of electronic systems.

Corresponding to the hierarchical view of the hardware, the software models may be described by a distributed system design that may comprise SOA design, that may comprise microservices architecture modeling, that may comprise cloud-native architecture that may comprise modular software design. SOA design is an architectural approach that structures software applications as a collection of services. As mentioned, in SOA, services are self-contained, loosely coupled, and independent modules that encapsulate a specific business functionality. These services communicate with each other over generally well-defined, standardized interfaces. One goal of SOA is to enhance flexibility, scalability, and maintainability by promoting a modular and reusable design. Microservices architecture modeling may involve designing and representing a software system based on the principles of microservices architecture. As mentioned, microservices are an architectural style that structures an application as a collection of small, independent services, each focused on a specific business capability. These services are designed to be loosely coupled, independently deployable, and scalable. Modeling a system using microservices architecture involves various aspects that capture the structure, communication, and behavior of the individual services. Cloud-native architecture is an approach to designing and building software applications that leverage capabilities and advantages of cloud computing platforms. It may be characterized by principles that enable applications to fully exploit the dynamic, scalable, and distributed nature of cloud environments. Modeling software using a cloud-native architecture involves considering various aspects that align with cloud-native principles. Modular software design is an approach that may involve breaking down a software system into smaller, independent, and interchangeable modules or components. Each module encapsulates a specific set of functionalities, and these modules interact with each other through well-defined interfaces. The goal of modular design is to enhance maintainability, reusability, and flexibility in software development. Modeling software with a modular design involves various aspects that focus on the organization, communication, and interaction between these discrete software modules.

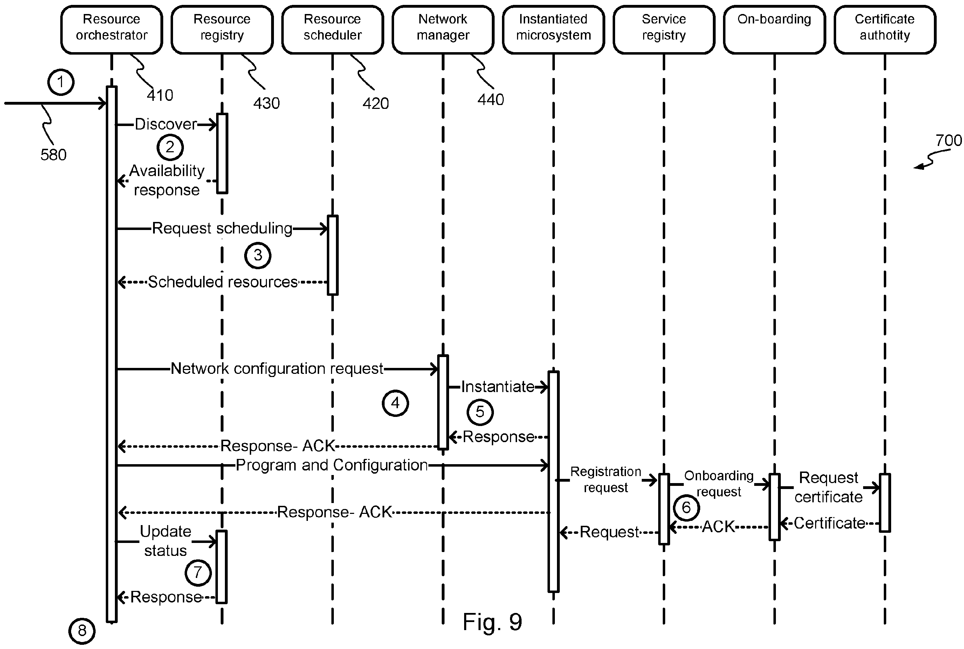

With reference to Fig. 9, an exemplary process 700 of dynamic instantiation of a microsystem 200 will be explained. Fig. 9 shows a Systems Modeling Language

(SysML) sequence diagram. As is known to the skilled person, a SysML diagram is a type of diagram that shows the interactions between system components or actors over time. In Fig. 9, interactions between system components or actors are shown as a series of events, with arrows indicating the flow of control between them. The events are organized along a timeline, with time progressing from top to bottom. The sequence is started by obtaining an integration request; this is indicated by the arrow at the upper left corner of Fig. 9. The process 700 will be explained in the following.
(1) The resource orchestrator 410 receives the service request with a microsystem model 580. The microsystem model 580 comprises data required to instantiate a new microsystem 200 and its microservice 400. Such data may be indicative of e.g. scheduling conditions, program instructions, configuration parameters, policies, a security certificate, etc.
(2) The resource orchestrator 410 queries the resource registry 430 for available hardware resources 112 that match the microsystem model 580. The resource orchestrator 410 examines the list of available resources and selects the ones that fulfill the requirements for that specific microsystem model 580. This portion of the process 700 is provided to ensure that the selected hardware resources 112 are available and meet the requirements of the microsystem model 580, thereby making possible their composability.
(3) After determining a selection of hardware resources 112 that will conform to the requirements of the microsystem model 580, the resource orchestrator 410 requests to the resource scheduler 420 the assignation of scheduled time and slots. This may comprise tasks such as resource scheduling, prioritization, etc.
(4) The result of the operations of the resource scheduler 420 provides microsystem deployment data. The microsystem deployment data is provided to the network manager 440. The network manager 440 is configured to, based on the microsystem deployment data, deploy a communication integration between the orchestrated hardware resources 112 and commence execution of the instantiated microsystem 200. This deployment will be configured to last for the lifetime requested in the resource recipe.
(5) The microsystem 200 may be deployed in response to the resources being configured with the parameters indicated in the microsystem model 580 and the program instructions are executed by a processing circuit (hardware resource 112 in the form of a processing circuit). Advantageously, the deployment is performed in response to the hardware resources 112 have been scheduled and the chiplet network 120 has been set up for them.
(6) The instantiated microsystem 200 is advantageously tested before being determined to be ready for use. Tests may be performed in order to ensure that overall operation of the microsystem is in accordance with the service request and microsystem model 580.
(7) If the test results are positive, the microsystem 200 is set and a registry update is sent to the resource registry 430 to list and store the information about the microsystem 200, microservices instances, and the hardware resources 112 used for this task.
(8) Responsive the microsystem 200 being on-boarded, microservice operation may start.

As exemplified with the process 700 in Fig. 9, operation and utilization of a microsystem 200 may commence responsive to the deployed microsystem 200 reaching a stationary state. At the stationary state, the microsystem 200 is configured as required and provided with necessary software for use of the microsystem, Once the intended microsystem(s) 200 are instantiated, the microservice(s) 400 associated with the microsystem(s) 200 are exposed on the external communications interface 150 and/or the chiplet network 120 and available for use. From the above, an architecture that enables hardware capabilities to be exposed as a set of microservices 400 that may be dynamically updated and extended given current needs of the chiplet arrangement 100. The operation of the available microservices 400 may comprise management of a number of dimensions, such as functionality, security, maintenance, evolution, reengineering and deployment.

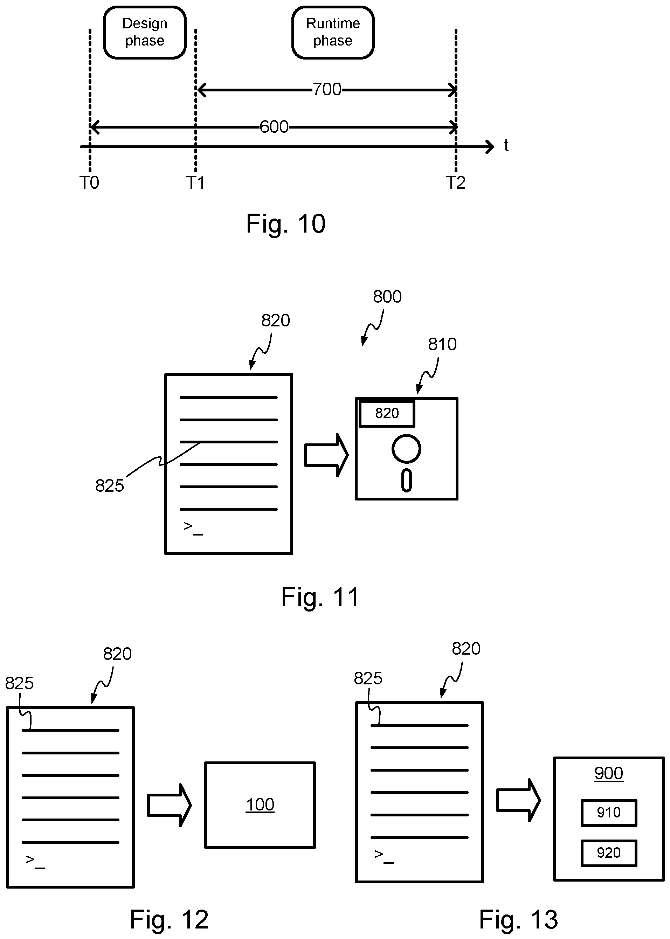

In Fig. 10, a lifecycle of a chiplet arrangement 100 is shown. At a starting point T0 in time, design of the chiplet arrangement 100 is initiated. The starting point T0 may be defined by a first conceptual idea of the chiplet arrangement 100, a problem statement, a first proof of concept etc. A design phase of the chiplet arrangement lasts from the starting point T0 to a first point T1 in time. The design phase may be referred to as design time. At the end of the design time, the hardware of the chiplet arrangement 100 is set and the chiplet arrangement 100 at a runtime phase (runtime for short) until an end of the lifecycle at a second point T2 in time. As shown in Fig. 10, the process 700 of dynamic instantiation of a microsystem 200 may be performed at any time during runtime. That is to say, a microsystem 200 may be dynamically instantiated at any point in time during runtime of the chiplet arrangement 100. Further, the method 600 of providing a microsystem model introduced with reference to Fig. 6 may be performed at any point in time during the lifecycle of the chiplet arrangement 100. That is to say, the method 600 may be performed at design time, and/or at runtime.

In Fig. 11, a computer program product 800 is shown. The computer program product 800 comprises a computer program 820 and a non-transitory computer readable medium 810. The computer program 820 may be stored on the computer readable medium 810. The computer readable medium 810 is, in Fig. 11, exemplified as a vintage 5,25" floppy disc, but may be embodied as any suitable non-transitory computer readable medium such as, but not limited to, hard disk drives (HDDs), solid-state drives (SSDs), optical discs (e.g., CD-ROM, DVD-ROM, CD-RW, DVD-RW), USB flash drives, magnetic tapes, memory cards, Read-Only Memories (ROM), network-attached storage (NAS), cloud storage etc. The computer program 820 comprises instructions 825 e.g. program instruction, software code, that, when executed by processing circuitry cause the processing circuitry to perform, or cause performance of, the complete, or a subset of, the method 600 introduced with reference to Fig. 6.

The instructions 825 may be executed by any suitable processing circuitry.

In Fig. 13, a computer system 900 is shown. The computer system 900 comprise processing circuitry 910 and is operatively connected to, or comprises, a data storage device 920 (volatile or non-volatile). The processing circuitry 910 may be configured to cause, or to perform, the whole, or part of the method 600 introduced in reference to Fig. 6. The computer program 620 may be loaded onto the data storage device 920 and the processing circuitry 910 may be configured to execute the instructions 825 of the computer program 820.

Modifications and other variants of the described embodiments will come to mind to one skilled in the art having benefit of the teachings presented in the foregoing description and associated drawings. Therefore, it is to be understood that the embodiments are not limited to the specific example embodiments described in this disclosure and that modifications and other variants are intended to be included within the scope of this disclosure. For example, while embodiments of the invention have been described with reference to chiplets and chiplet arrangements, persons skilled in the art will appreciate that the embodiments of the invention can equivalently be applied to any suitable computer system and not specifically to chiplets.

As a mere example, it is conceivable to provide a computer system controllable by an external communications interface. The computer system comprises a plurality of hardware resource, each providing at least one dedicated hardware functionality. The hardware resources are connected by a hardware network. The computer system is provided with a control plane configured to orchestrate one or more microsystems, each microsystem comprising at least one hardware resource and an addressable connection at the network. The control plane is further configured to expose one or more microsystems as microservices at the external communications interface.

Furthermore, although specific terms may be employed herein, they are used in a generic and descriptive sense only and not for purposes of limitation. Therefore, a person skilled in the art would recognize numerous variations to the described embodiments that would still fall within the scope of the appended claims. Furthermore, although individual features may be included in different claims (or embodiments), these may possibly advantageously be combined, and the inclusion of different claims (or embodiments) does not imply that a combination of features is not feasible and/or advantageous. In addition, singular references do not exclude a plurality. Finally, reference signs in the claims are provided merely as a clarifying example and should not be construed as limiting the scope of the claims in any way.

## Claims

1. A method (600) comprising:
obtaining (610) an engineering plan (510) comprising hardware requirements (512) and software requirements (514) of a microsystem (200) for producing and/or consuming one or more microservices (400);
obtaining (620) a chiplet arrangement hardware model (522) describing an electrical environment of a chiplet arrangement (100), wherein the chiplet arrangement (100) is controllable by an external communications interface (150) and comprises at least one chiplet (110) connected to a chiplet network (120), and wherein the at least one chiplet (110) comprises at least one
hardware resource (112);
estimating (630) a microsystem hardware model (530) based on the hardware requirements (512) and a hardware data set (526) describing hardware resources (112) of the chiplet arrangement (100);
simulating (640) the estimated microsystem hardware model (530) by electrical simulations based on the chiplet arrangement hardware model (522) to provide one or more hardware capabilities (534),
obtaining (650) a chiplet arrangement environment model (524) describing a software environment of the chiplet arrangement (100);
estimating (660) a microsystem software model (560) comprising the produced and/or consumed one or more microservices (400) using the hardware capabilities (534) and the software requirements (514);
simulating (670) the estimated microsystem software model (560) on the chiplet arrangement environment model (524) to provide one or more software capabilities (564);
compiling (680) the estimated microsystem hardware model (530), the estimated microsystem software model (560), the one or more hardware capabilities (534), the one or more software capabilities (564) to a microsystem model (580) comprising one or more microsystem capabilities (584) exposable as microservices (400) at the external communications interface (150) of the chiplet arrangement (100).

2. The method of claim 1, further comprising:
validating (645) the hardware capabilities (534) based on the hardware requirements (512) providing hardware validation data.

3. The method (600) of claim 1 or 2, further comprising:
providing alternative hardware capabilities (534) and an estimated alternative microsystem hardware model (530) for further processing by:
estimating (630) the alternative microsystem hardware model (530) based on the estimated microsystem hardware model (530), the hardware requirements (512), the hardware data set (526) and the hardware capabilities (534) comprising models of hardware resources (112) available on the chiplet arrangement (100); and
simulating (640) the estimated alternative microsystem hardware model (530) by electrical simulations to provide one or more alternative hardware capabilities (534).

4. The method (600) of claim 2 and 3, wherein providing alternative hardware capabilities (534) and the estimated alternative microsystem hardware model (530) for further processing is performed selectively based on the hardware validation data.

5. The method (600) of claim 3 or 4, further comprising:
validating (645) the alternative hardware capabilities (534) based on the hardware requirements (512) providing alternative hardware validation data.

6. The method of claim 2 and 5, further comprising, before estimating (660) the microsystem software model (560),
selecting one of the microsystem hardware model (530) or the alternative microsystem hardware model (530) as microsystem hardware model (530) for further processing based on processing of the hardware validation data and the alternative hardware validation data.

7. The method (600) of any one of claims 1 to 6 further comprising:
validating (675) the software capabilities (564) based on the software requirements (514) providing software validation data.

8. The method (600) of claim 3 and 7, wherein providing alternative hardware capabilities (534) and the estimated alternative microsystem hardware model (530) for further processing is performed selectively based on the software validation data.

9. The method of any one of claims 1 to 8, further comprising:
providing alternative software capabilities (564) and an estimated alternative microsystem software model (560) by:
estimating (660) the alternative microsystem software model (560) using the hardware capabilities (534) and the software requirements (514); and
simulating (670) the estimated alternative microsystem software model (560) on the chiplet arrangement environment model (524) to provide one or more alternative software capabilities (564).

10. The method (600) of claim 7 and 9, wherein providing alternative software capabilities (564) and the estimated alternative microsystem software model (560) for further processing is performed selectively based on the software validation data.

11. The method (600) of claim 9 or 10 further comprising:
validating (675) the alternative software capabilities (564) based on the software requirements (514) providing alternative software validation data.

12. The method of claim 7 and 11, further comprising, before providing the estimated microsystem hardware model (530) and the estimated microsystem software model (560) as a microsystem model (580),
selecting one of the microsystem software model (560) or the alternative microsystem software model (560) as microsystem software model (560) for further processing based on processing of the software validation data and the alternative software validation data.

13. The method (600) of any one of claims 1 to 12, wherein the software requirements (514) comprise at least one compatibility constraint, at least one performance constraint and/or at least one security constraint.

14. The method (600) of any one of claims 1 to 13, wherein the hardware requirements (512) comprise at least one physical constraint, at least one connectivity constraint and/or at least one availability constraint.

15. The method (600) of any one of claim 1 to 14, wherein the chiplet arrangement environment model (524) is a digital twin of the chiplet arrangement (100).

16. The method (600) of any one of claims 1 to 15, wherein the chiplet arrangement hardware model (522) comprises hardware models of one or more chiplets (110) of the chiplet arrangement (100).

17. The method (600) of any one of claims 1 to 16, wherein the chiplet arrangement hardware model (522) comprises physical hardware devices of one or more chiplets (110) of the chiplet arrangement (100).

18. The method (600) of any one of claims 1 to 17, further comprising:
deploying (682) the microsystem model (580) on the chiplet arrangement (100).

19. The method (600) of any one of claims 1 to 18 further comprising:
estimating (685) a utilization of the chiplet arrangement (100) based on the microsystem model (580) and the microsystem capabilities (584).

20. A computer system (900) comprising processing circuitry (910) configured to cause execution of the method (600) of any one of claims 1 to 19.
